# EUROPEAN PATENT APPLICATION

(11) **EP 4 787 699 A1**
(43) Date of publication of application: **05.08.2026**
(21) Application number: 25154800.4
(22) Date of filing: 29.01.2025
(51) Int. Cl.: H02M 3/335, H02M 3/00, H02M 3/06

(54) **BIDIRECTIONAL DCDC CONVERSION CIRCUIT AND BIDIRECTIONAL DCDC CONVERTER**

(71) Applicant: Guangdong Gospower Electric Technology Co., Ltd., Dongguan, Guangdong 523858 (CN)
(72) Inventor: ZHANG, Shichun, DongGuan City, 523858 (CN); RUAN, Shilin, DongGuan City, 523858 (CN); LONG, Yonglin, DongGuan City, 523858 (CN)
(74) Representative: Lapienis, Juozas

(57) **Abstract**

A bidirectional DCDC conversion circuit comprises a transformer, a power bus side circuit, a battery side circuit, and a controller. The power bus side circuit and the battery side circuit are respectively connected to the primary and secondary sides of the transformer. The bus side switching transistors synchronously conducts or turns off, and on/off of the battery side switch tube is in reverse phase with on/off of the bus side switch tube, thereby achieving bidirectional operation of battery charging and discharging. Multiple energy storage branches are connected in series or parallel, and output vibration can be effectively reduced through phase offset control. Th econversion circuit is free of an additional balancing circuit, and the balancing capacitor on the power supply side will automatically balance the bus voltage, thereby improving the conversion efficiency of the circuit.

## Description

### TECHNICAL FIELD

The invention relates to the technical field of bidirectional DC conversion, in particular to a bidirectional DCDC conversion circuit and a bidirectional DCDC converter.

### BACKGROUND

At present, a bidirectional DCDC circuit topology is required for battery charging and discharging in applications such as photovoltaic devices and energy storage devices. When there is external electrical energy, a battery can be charged in the forward direction through the DCDC conversion circuit. When there is no outside power supply, the battery needs to be discharged in reverse to outside devices through the DCDC conversion circuit.

Many topologies are available in bidirectional DCDC conversion circuits, and currently the Buck/Boost+LLC topology is commonly used in the industry. In this structure, the Buck/Boost circuit is responsible for voltage regulation, and the LLC isolated frequency converter circuit achieves isolation. This topology is stable and reliable, but has a relatively higher cost due to numerous components and a two-tier structure utilized therein.

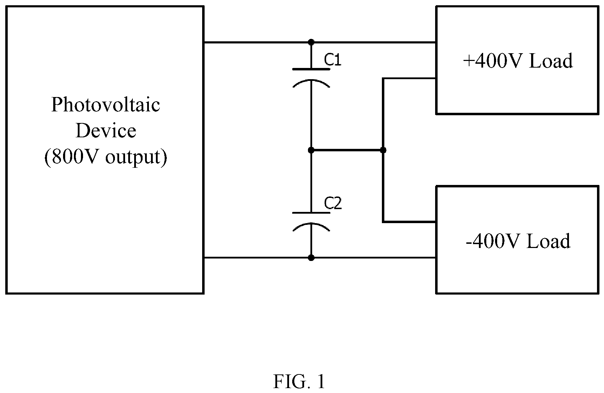

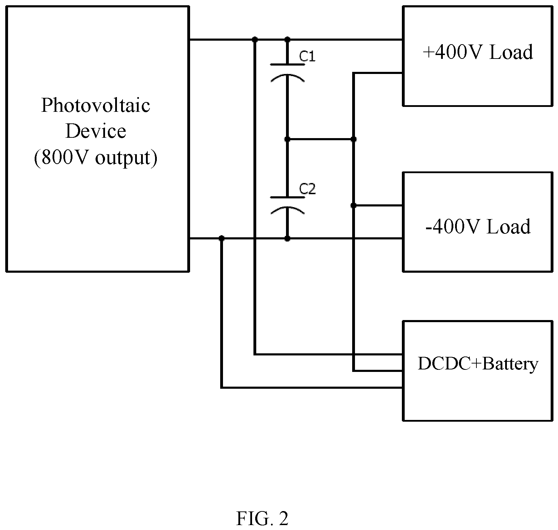

Especially in photovoltaic plus inverter applications, as shown in FIG. 1 and FIG. 2, the output of photovoltaic device is an 800V bus, and the subsequent inverter requires ±400V. In order to obtain ±400V, more capacitors in series are commonly used in industrial practice. However, when the load is unbalanced, additional circuits need to be added to balance the voltage of the series capacitors, which increases costs and reduces the conversion efficiency of the circuit.

During charging battery, the positive and negative busbars are connected to the charging circuit, and the charging circuit plays a certain balancing role. However, when the battery is fully charged, the charging circuit will lose its balancing function.

### BRIEF SUMMARY OF THE INVENTION

Therefore, a bidirectional DCDC conversion circuit and a bidirectional DCDC converter are provided, which support bidirectional charge and discharge of a battery, and can automatically balance the bus voltage no matter that the battery is fully charged or not charged.

A bidirectional DCDC converter, which is configured for bidirectional charge and discharge of a battery, comprises a transformer bank, a power bus side circuit, a battery side circuit, and a controller. The transformer bank comprises at least one transformer, and the power bus side circuit is electrically connected at a primary side of the transformer bank and between a positive terminal VBUS+ and a negative terminal VBUS- of the power bus. The battery side circuit is electrically connected between a secondary side of the transformer bank and the battery VBAT.

The power bus side circuit comprises a plurality of energy storage branches, each energy storage branch comprises at least one bus side switching transistor, the battery side circuit comprises at least one battery side switching transistor, the controller is configured for controlling on/off of each bus side switching transistor and each battery side switching transistor, the bus side switching transistors are turned on and off synchronously, and the battery-side switching transistor and the bus side switching transistor are turned on and off complementarily.

A balancing capacitor is provided between the power bus side circuit and any one of the positive terminal VBUS+ and the negative terminal VBUS- of the power bus. Each balancing capacitor is configured to automatically balance voltages of the positive terminal VBUS+ and the negative terminal VBUS- of the power bus through the energy storage branch.

Preferably, the battery side circuit further comprises a battery side filtering capacitor, and the secondary side of the transformer and the battery side switching transistor are connected in series and then connected in parallel with the battery side filtering capacitor between the battery VBAT and a grounding wire.

Each energy storage branch further comprises an energy storage inductor, and each energy storage inductor could be, e.g., a coupled inductor or a non-coupled inductor. each of the bus side switching transistors and the battery side switching transistors is selected from a group consisting of MOSFET, IGBT and a bipolar transistor.

Further, a bidirectional DCDC conversion circuit is provided, which comprises a bidirectional DCDC converter as described above. The transformer bank comprises a first transformer T1, a primary winding of the first transformer T1 has a center tap which is grounded.

The power bus side circuit comprises a first energy storage branch and a second energy storage branch. The first energy storage branch comprises a first inductor L1, a third capacitor C3, and a first switching transistor Q1. The second energy storage branch comprises a second inductor L2, a fourth capacitor C4, and a second switching transistor Q2.

A first capacitor C1 is connected between the positive terminal VBUS+ of the power bus and the center tap of the primary winding of the first transformer T 1. The first inductor L1 and the third capacitor C3 are connected in series and both connected between the positive terminal VBUS+ of the power bus and a common terminal of the primary winding of the first transformer T1. A drain of the first switching transistor Q1 is connected to a connection line between the first inductor L1 and the third capacitor C3, and a source of the first switching transistor Q1 is connected to the center tap of the primary winding of the first transformer T1.

A second capacitor C2 is connected between the negative terminal VBUS- of the power bus and the center tap of the primary winding of the first transformer T 1. The second inductor L2 and the fourth capacitor C4 are connected in series and both connected between the negative terminal VBUS- of the power bus and an opposite terminal of the primary winding of the first transformer T1. A source of the second switching transistor Q2 is connected to a connection line between the second inductor L2 and the fourth capacitor C4, and a drain of the second switching transistor Q2 is connected to the center tap of the primary winding of the first transformer T1.

Preferably, the battery side circuit comprises a third switching transistor Q3 and a fifth capacitor C5. The common terminal of the secondary winding of the first transformer T1 is connected to the battery VBAT, and both ends of the fifth capacitor C5 are respectively connected to a source of the third switching transistor Q3 and the battery VBAT. A drain of the third switching transistor Q3 is connected to an opposite terminal of the secondary winding of the first transformer T1.

A source of the third switching transistor Q3 and a terminal of the fifth capacitor C5 are grounded.

Preferably, the bidirectional DCDC conversion circuit further comprises an active absorption circuit which is connected to the battery side circuit, and comprises a first diode D1, a second diode D2, a third inductor L3, and a sixth capacitor C6.

The first diode D1, the second diode D2, and the third inductor L3 are sequentially connected in series, and the three series diodes are connected in parallel with the fifth capacitor C5. Both terminals of the sixth capacitor C6 are respectively connected to a connection line between the first diode D1 and the second diode D2, and a connection line between the opposite terminal of the secondary winding of the first transformer T1 and a drain of the third switching transistor Q3.

Furthermore, a bidirectional DCDC conversion circuit is provided, which comprises a bidirectional DCDC converter as described above. The transformer bank comprises a first transformer T1 which has two primary windings. The two primary windings are referred to as a first primary winding and a second primary winding. A common terminal of the first primary winding is connected to a positive terminal VBUS+ of the power bus. An opposite terminal of the second primary winding is connected to a negative terminal VBUS- of the power bus.

The power bus side circuit comprises a first energy storage branch and a second energy storage branch. The first energy storage branch comprises a first inductor L1, a third capacitor C3, and a first switching transistor Q1. The second energy storage branch comprises a second inductor L2, a fourth capacitor C4, and a second switching transistor Q2.

The first inductor L1 and the third capacitor C3 are connected in series and both connected between a grounded line and an opposite terminal of the primary winding of the first transformer T1. A source of the first switching transistor Q1 is connected to a connection line between the first inductor L1 and the third capacitor C3, and a drain of the first switching transistor Q1 is connected between a positive terminal VBUS+ of the power bus and a common terminal of the first primary winding of the first transformer T1. A first capacitor C1 is connected between the positive terminal VBUS+ of the power bus and a free end of the first inductor L1.

The second inductor L2 and the fourth capacitor C4 are connected in series and both connected between a grounded wire and a common terminal of the second primary winding of the first transformer T1. A drain of the second switching transistor Q2 is connected to a connection line between the second inductor L2 and the fourth capacitor C4, and a source of the second switching transistor Q2 is connected between the negative terminal VBUS- of the power bus and an opposite terminal of a second primary winding of the first transformer T 1. A second capacitor C2 is connected between negative terminal VBUS- of the power bus and a free end of the first inductor L2.

The battery side circuit comprises a third switching transistor Q3 and a fifth capacitor C5. The common terminal of the secondary winding of the first transformer T1 is connected to the battery VBAT, and both ends of the fifth capacitor C5 are respectively connected to a source of the third switching transistor Q3 and the battery VBAT. A drain of the third switching transistor Q3 is connected to an opposite terminal of the secondary winding of the first transformer T 1.

A source of the third switching transistor Q3 and a terminal of the fifth capacitor C5 are grounded.

Preferably, the bidirectional DCDC conversion circuit further comprises a clamp circuit, which comprises a first diode D1 and a second diode D2, wherein an anode of the first diode D1 is connected to the negative terminal VBUS - of the power bus, and a cathode of the first diode D1 is connected to a connection line between the opposite terminal of the first primary winding of the first transformer T1 and the third capacitor C3. A cathode of the second diode D2 is connected to the positive terminal VBUS+ of the power bus, and an anode of the second diode D2 is connected to a connection line between a common terminal of the second primary winding of the first transformer T1 and the fourth capacitor C4.

In accordance to another aspect of the present invention, a bidirectional DCDC conversion circuit is provided, which comprises a bidirectional DCDC converter as described above, wherein the transformer bank comprises a plurality of transformers, and the primary sides of the plurality of transformers are connected in parallel or series, and the secondary sides of the multiple transformers are connected in parallel or series, respectively.

The power bus side circuit comprises a plurality of energy storage branches, each of which is connected to the primary side of one corresponding transformer, and each energy storage branch has a uniform phase offset between them.

Preferably, the transformer bank comprises a first transformer T1 and a second transformer T2, wherein the primary winding of the first transformer T1 is connected in series with the primary winding of the second transformer T2, and the secondary winding of the first transformer T1 is connected in parallel with the secondary winding of the second transformer T2. The common terminal of the primary winding of the first transformer T1 is connected to the positive terminal VBUS+ of the power bus, and the opposite terminal of the primary winding of the second transformer T2 is connected to the negative terminal VBUS- of the power bus. The opposite terminal of the primary winding of the first transformer T1 is connected to the common terminal of the primary winding of the second transformer T2 and grounded.

The power bus side circuit comprises a first energy storage branch and a second energy storage branch. The first energy storage branch comprises a first inductor L1, a third capacitor C3, and a first switching transistor Q1. The second energy storage branch comprises a second inductor L2, a fourth capacitor C4, and a second switching transistor Q2.

The battery side circuit comprises a third switching transistor Q3 and a fourth switching transistor Q4, wherein the fourth switching transistor Q4 is connected to the secondary winding of the first transformer T1, and the third switching transistor Q3 is connected to the secondary winding of the second transformer T2. The controller is configured to separately control the on/off of the first switching transistor Q1, the second switching transistor Q2, the third switching transistor Q3, and the fourth switching transistor Q4.

A phase offset between the first switching transistor Q1 and the second switching transistor Q2 is 180 °, the fourth switching transistor Q3 and the first switching transistor Q1 are provided with a complementary switching capability, and the third switching transistor Q3 and the second switching transistor Q2 are provided with a complementary switching capability.

Preferably, a first capacitor C1 is connected between the positive terminal VBUS+ of the power bus and the opposite terminal of the primary winding of the first transformer T1. The first inductor L1 and the third capacitor C3 are connected in series between the positive terminal VBUS+ of the power bus and the common terminal of the primary winding of the first transformer T1. A drain of the first switching transistor Q1 is connected to a connection line between the first inductor L1 and the third capacitor C3, and a source of the first switching transistor Q1 is connected to the opposite terminal of the primary winding of the transformer T 1.

A second capacitor C2 is connected between the negative terminal VBUS- of the power bus and the common terminal of the primary winding of the second transformer T2. The second inductor L2 and the fourth capacitor C4 are connected in series and then connected between the negative terminal VBUS- of the power bus and the opposite terminal of the primary winding of the second transformer T2. A source of the second switching transistor Q2 is connected to a connection line between the second inductor L2 and the fourth capacitor C4, and a drain of the second switching transistor Q2 is connected to the common terminal of the primary winding of the second transformer T2.

A drain of the fourth switching transistor Q4 is connected to the opposite terminal of the secondary winding of the first transformer T1, and the source of the fourth switching transistor Q4 is grounded. A drain of the third switching transistor Q3 is connected to the opposite terminal of the secondary winding of the second transformer T2, and the source of the third switching transistor Q3 is grounded. The common terminal of the secondary winding of the first transformer T1 and the common terminal of the secondary winding of the second transformer T2 are connected in parallel to the battery VBAT.

In the above-mentioned bidirectional DCDC converter and conversion circuit, the power bus side circuit and the battery side circuit are respectively connected to the primary and secondary sides of the transformer. The bus side switching transistors synchronously on or off under the control of the controller, and on or off of the battery side switching transistors are opposite to that of the bus side switching transistor, thereby achieving bidirectional charging and discharging of the battery. The plurality of energy storage branches are connected in series or parallel, and output ripple will be effectively reduced through phase offset control. The bidirectional DCDC conversion circuit of the present disclosure is free of an additional balancing circuit, and the balancing capacitors on the power supply side will automatically balance the bus voltage. The bidirectional DCDC conversion circuit of the present disclosure has a usefuuly simplified structure, uses fewer components, a reduced cost, and an improved conversion efficiency of the circuit. The circuit structure of the present disclosure is readily operated, cost-effective, and convenient to promote.

### BRIEF DESCRIPTION OF THE SEVERAL VIEWS OF THE DRAWINGS

FIGS. 1 and 2 are schematic diagrams of two traditional bidirectional DCDC conversion circuits.
FIG. 3 is a schematic structural diagram of a bidirectional DCDC conversion circuit (with non-coupled inductors) according to a first embodiment of the present invention.
FIG. 4 is a schematic structural diagram of the bidirectional DCDC conversion circuit (with coupled inductors) according to the first embodiment of the present invention.
FIG. 5 is a schematic structural diagram of another bidirectional DCDC conversion circuit (with diodes used in the power supply side) according to another embodiment of the present invention.
FIG. 6 is is a schematic structural diagram of a bidirectional DCDC conversion circuit (with diodes used in the battery side) according to an embodiment of the present invention.
FIG. 7 is a schematic structural diagram of a bidirectional DCDC conversion circuit (with an active absorption circuit) according to a second embodiment of the present invention.
FIG. 8 is a schematic structural diagram of a bidirectional DCDC conversion circuit (with a transformer having a plurality of primary windings) according to a third embodiment of the present invention.
FIG. 9 is a schematic structural diagram of a bidirectional DCDC conversion circuit (with a clamp circuit) according to a fourth embodiment of the present invention.
FIG. 10 is a schematic structural diagram of a bidirectional DCDC conversion circuit (with a center tap clamp circuit) according to a fifth embodiment of the present invention.
FIG. 11 is a schematic structural diagram of a bidirectional DCDC conversion circuit (with a plurality of transformers connected in both parallel and series) according to a sixth embodiment of the present invention.
FIG. 12 is a schematic diagram of an alternative bidirectional DCDC conversion circuit (with a plurality of transformers connected in both parallel and series) according to the sixth embodiment of the present invention.
FIG. 13 is a schematic diagram of a first structure of another alternative bidirectional DCDC conversion circuit (with a plurality of transformers connected in both parallel and series) according to the sixth embodiment of the present invention.
FIG. 14 is a schematic structural diagram of a bidirectional DCDC conversion circuit (with a primary excitation inductor) according to a seventh embodiment of the present invention.
FIG. 15 is a schematic structural diagram of an alternative bidirectional DCDC conversion circuit (with a primary excitation inductor) according to the seventh embodiment of the present invention.
FIG. 16 is a schematic structural diagram of an alternative bidirectional DCDC conversion circuit (with a plurality of phase offset energy storage branches) according to the eighth embodiment of the present invention.

### DETAILED DESCRIPTION OF THE INVENTION

A bidirectional DCDC converter and a conversion circuit provided by the present invention are described in detail below by way of examples in conjunction with specific embodiments and accompanying drawings.

In accordance with an embodiment of the present invention, a bidirectional DCDC converter, which is configured for bidirectional charge and discharge of a battery, comprises a transformer bank, a power bus side circuit, a battery side circuit, and a controller. The transformer bank comprises at least one transformer, and the power bus side circuit is electrically connected at a primary side of the transformer bank and between a positive terminal VBUS+ and a negative terminal VBUS- of the power bus. The battery side circuit is electrically connected between a secondary side of the transformer bank and the battery VBAT.

The power bus side circuit comprises a plurality of energy storage branches, each energy storage branch comprises at least one bus side switching transistor, the battery side circuit comprises at least one battery side switching transistor, the controller is configured for controlling on/off of each bus side switching transistor and each battery side switching transistor, the bus side switching transistors are turned on and off synchronously, and the battery side switching transistor and the bus side switching transistor are turned on and off complementarily.

A balancing capacitor is provided between the power bus side circuit and any one of the positive terminal VBUS+ and the negative terminal VBUS- of the power bus. Each balancing capacitor is configured to automatically balance voltages of the positive terminal VBUS+ and the negative terminal VBUS- of the power bus through the energy storage branch.

Preferably, the battery side circuit further comprises a battery side filtering capacitor, and the secondary side of the transformer and the battery side switching transistor are connected in series and then connected in parallel with the battery side filtering capacitor between the battery VBAT and a grounding wire.

Preferably, each energy storage branch further comprises an energy storage inductor, and each energy storage inductor could be, e.g., a coupled inductor or a non-coupled inductor. Each of both both the bus side switching transistors and the battery side switching transistor is selected from a group consisting of MOSFET, IGBT, a bipolar transistor, and any other components with switching capability.

Specifically, a substrate for MOSFET is preferably silicon carbide or gallium nitride material.

### Embodiment 1

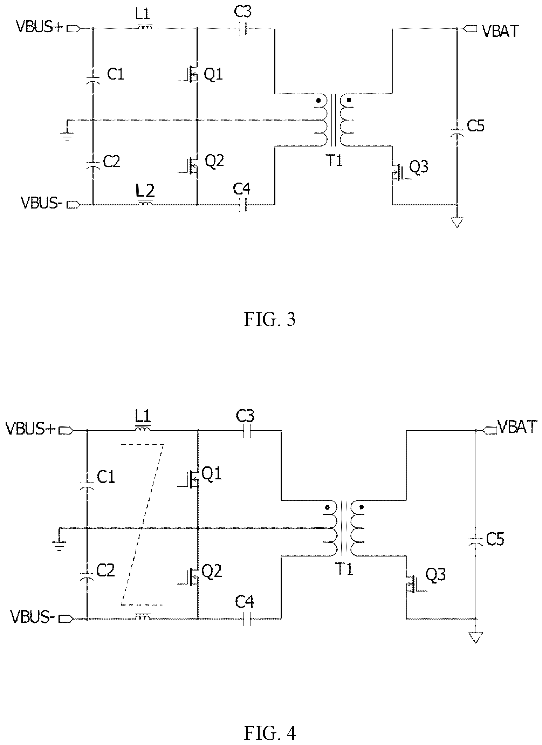

Referring to FIG. 3 through FIG. 6, in accordance with a first embodiment of the present invention, a bidirectional DCDC conversion circuit is provided for bidirectional charge and discharge of a battery, which comprises a transformer bank, a power bus side circuit, a battery side circuit, and a controller. The transformer bank comprises a first transformer T1, a primary winding of the first transformer T1 has a center tap which is grounded.

The power bus side circuit comprises a first energy storage branch and a second energy storage branch. The first energy storage branch comprises a first inductor L1, a third capacitor C3, and a first switching transistor Q1. The second energy storage branch comprises a second inductor L2, a fourth capacitor C4, and a second switching transistor Q2.

A first capacitor C1 is connected between the positive terminal VBUS+ of the power bus and the center tap of the primary winding of the first transformer T 1. The first inductor L1 and the third capacitor C3 are connected in series and both connected between the positive terminal VBUS+ of the power bus and a common terminal of the primary winding of the first transformer T1. A drain of the first switching transistor Q1 is connected to a connection line between the first inductor L1 and the third capacitor C3, and a source of the first switching transistor Q1 is connected to the center tap of the primary winding of the first transformer T1.

A second capacitor C2 is connected between the negative terminal VBUS- of the power bus and the center tap of the primary winding of the first transformer T 1. The second inductor L2 and the fourth capacitor C4 are connected in series and both connected between the negative terminal VBUS- of the power bus and an opposite terminal of the primary winding of the first transformer T1. A source of the second switching transistor Q2 is connected to a connection line between the second inductor L2 and the fourth capacitor C4, and a drain of the second switching transistor Q2 is connected to the center tap of the primary winding of the first transformer T1.

Preferably, the battery side circuit comprises a third switching transistor Q3 and a fifth capacitor C5. The common terminal of the secondary winding of the first transformer T1 is connected to the battery VBAT, and both ends of the fifth capacitor C5 are respectively connected to a source of the third switching transistor Q3 and the battery VBAT. A drain of the third switching transistor Q3 is connected to an opposite terminal of the secondary winding of the first transformer T1.

Specifically, the first inductor L1 and the second inductor L2 are coupled inductors or non-coupled inductors.

The first capacitor C1 and the second capacitor C2 are bus side filtering capacitors, and the fifth capacitor C5 is a battery side filtering capacitor.

When charging the VBAT battery, the bidirectional DCDC conversion circuit operates in a forward direction. When the first switching transistor Q1 and the second switching transistor Q2 are turned on, the third switching transistor Q3 is turned off, and the first inductor L1 and the second inductor L2 store energy through the first switching transistor Q1 and the second switching transistor Q2. The first transformer T1, the third capacitor C3, and the fourth capacitor C4 are reset. When the first switching transistor Q1 and the second switching transistor Q2 are turned off, the third switching transistor Q3 is turned on, and the energy of the first inductor L1 and the second inductor L2 is transferred to the battery side through the third capacitor C3, the fourth capacitor C4, and the first transformer T1, thus achieving VBAT charging of the battery

When the VBAT battery is discharged, the bidirectional DCDC conversion circuit operates reversely. When the third switching transistor Q3 is turned on, the first switching transistor Q1 and the second switching transistor Q2 are turned off, and the energy of the battery is transmitted to the power bus side through the first transformer T1, the third capacitor C3, and the fourth capacitor C4. The first inductor L1 and the second inductor L2 store energy. When the third switching transistor Q3 is turned off, the first switching transistor Q1 and the second switching transistor Q2 are turned on, and the first inductor L1 and the second inductor L2 freewheel current, releasing energy to the power bus VBUS+, VBUS-, and then the third capacitor C3, the fourth capacitor C4, and the first transformer T1is reset.

When the battery VBAT is neither charging nor discharging, the first switching transistor Q1, the second switching transistor Q2, and the third switching transistor Q3 work normally. When the voltages of the first capacitor C1 and the second capacitor C2 are equal, the bidirectional DCDC conversion circuit operates in an unloaded state. When the voltages of the first capacitor C1 and the second capacitor C2 are not equal, a high-energy side releases energy, and energy flows from the high-energy side through the third capacitor C3, the fourth capacitor C4, and the first transformer T1 to the low-voltage side, thereby achieving automatic voltage balancing on the first capacitor C1 and the second capacitor C2.

For example, when the voltage on the first capacitor C1 is higher than that on the second capacitor C2, the first and second switching transistors Q1, Q2 are simultaneously turned on or off with the same switching cycle. At this time, the energy on the first capacitor C1 flows through the first inductor L1 and the third capacitor C3 through the first transformer T1. Since the upper and lower windings of the primary winding of the first transformer T1 are the same, the voltage of the upper and lower windings of the primary winding is equal, causing a lower half of the primary winding of the first transformer T1 to work in a reverse current state and charge in reverse to the second capacitor C2 through the fourth capacitor C4 and the third capacitor C3, thereby maintaining equal voltage on the first capacitor C1 and the second capacitor C2. Thus, automatic balancing of the bus voltage on the power supply side is achieved.

Specifically, in this embodiment, the first inductor L1 and the second inductor L2 could be, e.g., coupled inductors or non-coupled inductors. For example, non-coupled inductors are used in FIG. 3 and coupled inductors are used in FIG. 4.

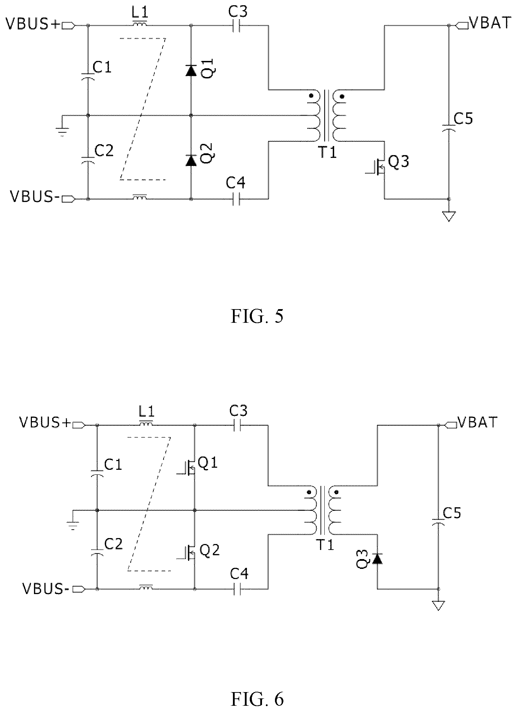

The first switching transistor Q1, the second switching transistor Q2, and the third switching transistor Q3 in this embodiment could be, e.g., MOSFETs, IGBT, Bipolar transistors or diodes and any other components with switching performance. As shown in FIG. 5, the first switch transistor Q1 and the second switch transistor Q2 are replaced with diodes, and in FIG. 6, the third switch transistor Q3 is replaced with a diode.

### Embodiment 2

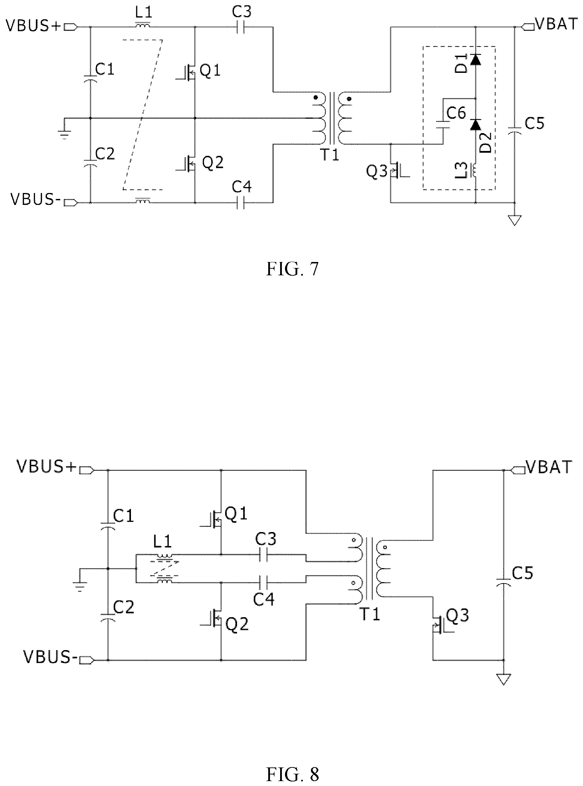

Referring to FIG. 7, in accordance with a second embodiment of the present invention, a bidirectional DCDC conversion circuit is provided, which adds an active absorption circuit on the basis of the bidirectional DCDC conversion circuit of the first embodiment.

The bidirectional DCDC conversion circuit comprises a transformer bank, a power bus side circuit, a battery side circuit, a controller, and an active absorption circuit. The transformer bank comprises a first transformer T1, a primary winding of the first transformer T1 has a center tap which is grounded.

The power bus side circuit comprises a first energy storage branch and a second energy storage branch. The first energy storage branch comprises a first inductor L1, a third capacitor C3, and a first switching transistor Q1. The second energy storage branch comprises a second inductor L2, a fourth capacitor C4, and a second switching transistor Q2.

A first capacitor C1 is connected between the positive terminal VBUS+ of the power bus and the center tap of the primary winding of the first transformer T 1. The first inductor L1 and the third capacitor C3 are connected in series and both are connected between the positive terminal VBUS+ of the power bus and a common terminal of the primary winding of the first transformer T1. A drain of the first switching transistor Q1 is connected to a connection line between the first inductor L1 and the third capacitor C3, and a source of the first switching transistor Q1 is connected to the center tap of the primary winding of the first transformer T1.

A second capacitor C2 is connected between the negative terminal VBUS- of the power bus and the center tap of the primary winding of the first transformer T 1. The second inductor L2 and the fourth capacitor C4 are connected in series and both connected between the negative terminal VBUS- of the power bus and an opposite terminal of the primary winding of the first transformer T1. A source of the second switching transistor Q2 is connected to a connection line between the second inductor L2 and the fourth capacitor C4, and a drain of the second switching transistor Q2 is connected to the center tap of the primary winding of the first transformer T1.

Preferably, the battery side circuit comprises a third switching transistor Q3 and a fifth capacitor C5. The common terminal of the secondary winding of the first transformer T1 is connected to the battery VBAT, and both ends of the fifth capacitor C5 are respectively connected to a source of the third switching transistor Q3 and the battery VBAT. A drain of the third switching transistor Q3 is connected to an opposite terminal of the secondary winding of the first transformer T1.

A source of the third switching transistor Q3 and a terminal of the fifth capacitor C5 are grounded.

Preferably, the active absorption circuit is connected to the battery side circuit, and comprises a first diode D1, a second diode D2, a third inductor L3, and a sixth capacitor C6.

The first diode D1, the second diode D2, and the third inductor L3 are sequentially connected in series, and the three series diodes are connected in parallel with the fifth capacitor C5. Both terminals of the sixth capacitor C6 are respectively connected to a connection line between the first diode D1 and the second diode D2, and a connection line between the opposite terminal of the secondary winding of the first transformer T1 and a drain of the third switching transistor Q3.

Specifically, the active absorption circuit is configured to effectively absorb the stress of the third switching transistor Q3 caused by a leakage inductance of transformer T1.

Specifically, when the third switching transistor Q3 is just turned off and a drain source voltage Vds of the third switching transistor Q3 increases, the voltage on the left side of the sixth capacitor C6 follows the drain voltage of Q3. When the voltage on the right side of the sixth capacitor C6 is higher than Vbat, the first diode D1 conducts, causing the sixth capacitor C6 to suppress the Vds voltage of the third switching transistor Q3 and reduce vibration(like burrs). When the Vds of the third switching transistor Q3 is turned off and stabilized, the Vds voltage is higher than Vbat, and the voltage of the sixth capacitor C6 remains in a left high and right low state.

When the third switching transistor Q3 is turned on, the left side of the sixth capacitor C6 is short circuited to ground via the third switching transistor Q3, and the voltage on the right side of the sixth capacitor C6 becomes negative, causing the second diode D2 to conduct. The third inductor L3 discharges the sixth capacitor C6 through the second diode D2, and the current of the third inductor L3 increases. When the voltage of the sixth capacitor C6 drops to 0V, the current of the third inductor L3 is at its maximum and freewheels current. The voltage of the sixth capacitor C6 gradually becomes low on the left and high on the right, and the third inductor L3 continues to discharge. The voltage on the right side of the sixth capacitor C6 continues to rise. When it is higher than Vbat, the first diode D1 conducts. The third inductor L3 continues to discharge until the current reaches 0, maintaining this state until the next time the third switching transistor Q3 is turned off.

When the third switching transistor Q3 is turned off again, the voltage of the sixth capacitor C6 is in a low left and high right state, and the first diode D1 is turned on. Due to the clamping effect of the sixth capacitor C6, it will limit the rising rate of Vds of the third switching transistor Q3, thereby reducing the Vds stress of the third switching transistor Q3.

In this way, through the energy transfer of the sixth capacitor C6 and the third inductor L3, the leakage inductance energy of the transformer is transferred to Vbat, completing the lossless absorption of leakage inductance energy.

### Embodiment 3

Referring to FIG. 8, in accordance with a third embodiment of the present invention, a bidirectional DCDC conversion circuit is provided, in which the transformer T1 is provided with a plurality of primary windings.

The bidirectional DCDC conversion circuit comprises a transformer bank, a power bus side circuit, a battery side circuit, and a controller. The power bus side circuit comprises a first energy storage branch and a second energy storage branch. The transformer bank comprises a first transformer T1, which has two primary windings. The two primary windings are referred to as a first primary winding and a second primary winding. A common terminal of the first primary winding is connected to a positive terminal VBUS+ of the power bus. An opposite terminal of the first primary winding is grounded through the first energy storage branch. An opposite terminal of the second primary winding is connected to a negative terminal VBUS-of the power bus. The common terminal of the second primary winding is grounded through the second energy storage branch.

The first energy storage branch comprises a first inductor L1, a third capacitor C3, and a first switching transistor Q1. The second energy storage branch comprises a second inductor L2, a fourth capacitor C4, and a second switching transistor Q2.

The first inductor L1 and the third capacitor C3 are connected in series and both connected between a grounded line and an opposite terminal of the primary winding of the first transformer T1. A source of the first switching transistor Q1 is connected to a connection line between the first inductor L1 and the third capacitor C3, and a drain of the first switching transistor Q1 is connected between a positive terminal VBUS+ of the power bus and a common terminal of the first primary winding of the first transformer T1. A first capacitor C1 is connected between the positive terminal VBUS+ of the power bus and a free end of the first inductor L1.

The second inductor L2 and the fourth capacitor C4 are connected in series and both connected between a grounded wire and a common terminal of the second primary winding of the first transformer T1. A drain of the second switching transistor Q2 is connected to a connection line between the second inductor L2 and the fourth capacitor C4, and a source of the second switching transistor Q2 is connected between the negative terminal VBUS- of the power bus and an opposite terminal of a second primary winding of the first transformer T 1. A second capacitor C2 is connected between negative terminal VBUS- of the power bus and a free end of the first inductor L2.

The battery side circuit comprises a third switching transistor Q3 and a fifth capacitor C5. The common terminal of the secondary winding of the first transformer T1 is connected to the battery VBAT, and both ends of the fifth capacitor C5 are respectively connected to a source of the third switching transistor Q3 and the battery VBAT. A drain of the third switching transistor Q3 is connected to an opposite terminal of the secondary winding of the first transformer T1. A source of the third switching transistor Q3 and a terminal of the fifth capacitor C5 are grounded.

### Embodiment 4

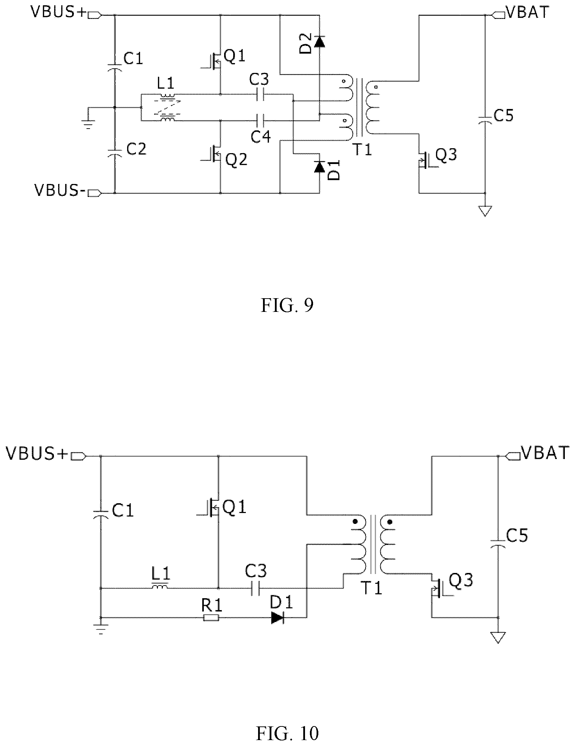

Referring to FIG. 9, in accordance with a fourth embodiment of the present invention, a bidirectional DCDC conversion circuit is provided, which adds a clamp circuit on the basis of the bidirectional DCDC conversion circuit of the third embodiment, to protect the circuit from an influence of voltage spike.

The bidirectional DCDC conversion circuit comprises a transformer bank, a power bus side circuit, a battery side circuit, a controller, and a clamp circuit. The power bus side circuit comprises a first energy storage branch and a second energy storage branch. The transformer bank comprises a first transformer T1, which has two primary windings. The two primary windings are referred to as a first primary winding and a second primary winding. A common terminal of the first primary winding is connected to a positive terminal VBUS+ of the power bus. An opposite terminal of the first primary winding is grounded through the first energy storage branch. An opposite terminal of the second primary winding is connected to a negative terminal VBUS- of the power bus. The common terminal of the second primary winding is grounded through the second energy storage branch.

Structure of the transformer bank, the power bus side circuit, the battery side circuit, and the controller in this embodiment is essentially equal to structure of those corresponding devices in the third embodiment. The clamp circuit is connected to the power bus side circuit, and the clamping function of the primary switching transistor is achieved through an external diode.

The clamp circuit comprises a first diode D1 and a second diode D2, wherein an anode of the first diode D1 is connected to the negative terminal VBUS- of the power bus, and a cathode of the first diode D1 is connected to a connection line between the opposite terminal of the first primary winding of the first transformer T1 and the third capacitor C3. A cathode of the second diode D2 is connected to the positive terminal VBUS+ of the power bus, and an anode of the second diode D2 is connected to a connection line between a common terminal of the second primary winding of the first transformer T1 and the fourth capacitor C4.

Specifically, when a drain source voltage Vds of the first switching transistor Q1 or the second switching transistor Q2 is more than 3Vbus/2, the first diode D1 or the second diode D2 conducts, thus achieving voltage clamping action between the first switching transistor Q1 and the second switching transistor Q2, and releasing the energy of the leakage inductance and parasitic inductance of the first switching transistor Q1 and the second switching transistor Q2 to another energy storage branch.

### Embodiment 5

Referring to FIG. 10, in accordance with a fifth embodiment of the present invention, a bidirectional DCDC conversion circuit is provided,in which a clamp circuit is connected onto the center tap of the transformer.

The bidirectional DCDC conversion circuit comprises a transformer bank, a power bus side circuit, a battery side circuit, a controller, and a clamp circuit. The power bus side circuit comprises an energy storage branch. The transformer bank comprises a transformer T1. A common terminal of the primary winding of the transformer T1 is connected to a positive terminal VBUS+ of the power bus. An opposite terminal of the primary winding of the transformer T1 is grounded through the energy storage branch. Structure of the the battery side circuit and the controller in this embodiment is essentially equal to structure of the two corresponding devices in the third embodiment.

The energy storage branch comprises a first inductor L1, a third capacitor C3, and a first switching transistor Q1. The first inductor L1 and the third capacitor C3 are connected in series and both connected between a grounded line and an opposite terminal of the primary winding of the first transformer T1. A source of the first switching transistor Q1 is connected to a connection line between the first inductor L1 and the third capacitor C3, and a drain of the first switching transistor Q1 is connected between a positive terminal VBUS+ of the power bus and a common terminal of the primary winding of the first transformer T 1. A first capacitor C1 is connected between the positive terminal VBUS+ of the power bus and a free end of the first inductor L 1.

The clamp circuit in this embodiment comprises a first diode D1 and a first resistor R1. A cathode of the first diode D1 is connected to the center tap of the primary winding of the first transformer T1 and an anode of the first diode D1 is grounded through the first resistor R1, thereby achieving a voltage clamping function of the first switching transistor Q1.

### Embodiment 6

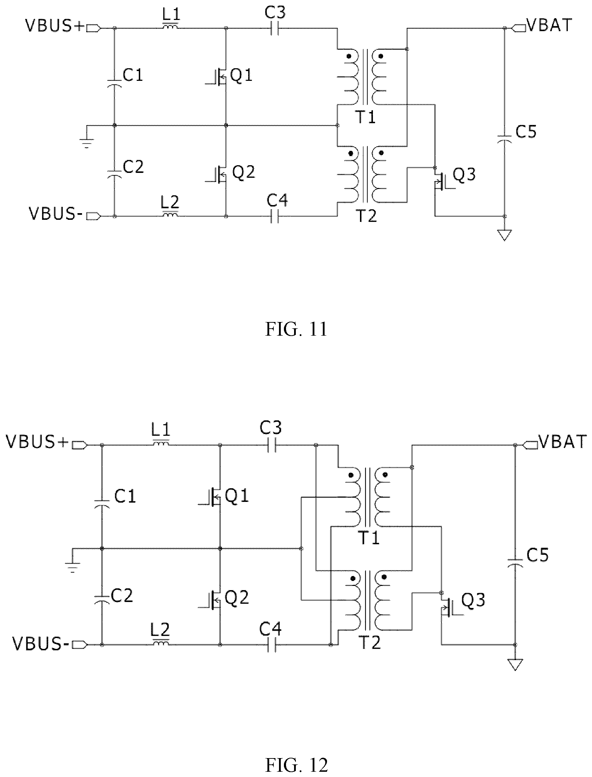

Referring to FIG. 11 through 13, in accordance with a sixth embodiment of the present invention, a bidirectional DCDC conversion circuit is provided. In this embodiment, the transformer bank comprises a plurality of transformers, and the primary sides of the plurality of transformers are connected in parallel or series, and the secondary sides of the multiple transformers are connected in parallel or series, respectively.

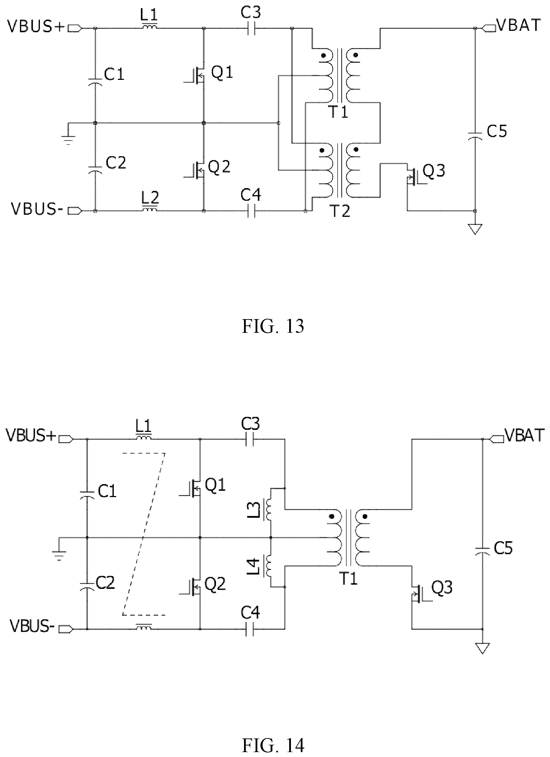

The bidirectional DCDC conversion circuit comprises a transformer bank, a power bus side circuit, a battery side circuit, and a controller. The power bus side circuit comprises a first energy storage branch and a second energy storage branch. The transformer bank comprises a first transformer T1 and a second transformer T2. As shown in FIG. 11, the primary winding of the first transformer T1 is connected in series to the primary winding of the second transformer T2, and the secondary winding of the first transformer T1 is connected in parallel to the secondary winding of the second transformer T2. As shown in FIG. 12, the primary winding of the first transformer T1 is connected in parallel with the primary winding of the second transformer T2, and the secondary winding of the first transformer T1 is connected in parallel with the secondary winding of the second transformer T2. As shown in FIG. 13, the primary winding of the first transformer T1 is connected in parallel with the primary winding of the second transformer T2, and the secondary winding of the first transformer T1 is connected in series with the secondary winding of the second transformer T2.

### Embodiment 7

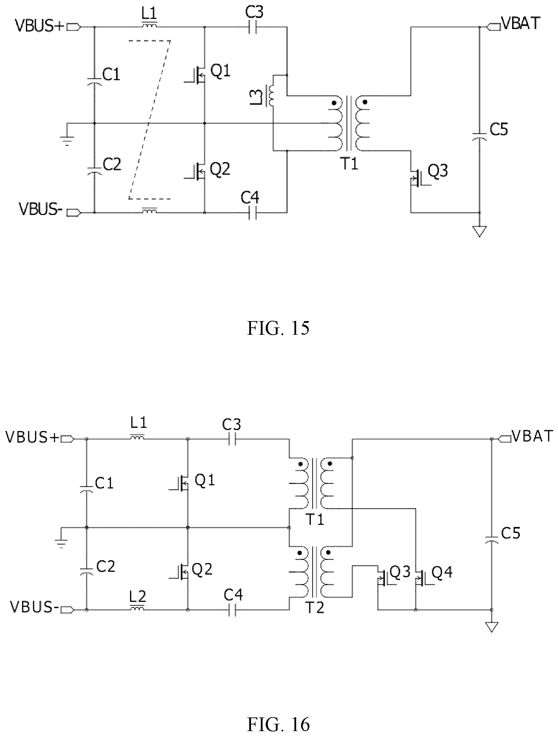

Referring to FIG. 14 and FIG. 15, in accordance with a seventh embodiment of the present invention, a bidirectional DCDC conversion circuit is provided, in which the primary winding of a transformer is divided into a transformer and a primary excitation inductor. The primary excitation inductor is connected in parallel with the transformer, allowing the primary excitation inductor to support resetting of the capacitors in the energy storage branch, and then the excitation inductor is used as a regular inductor.

Specifically, As shown in FIG. 14, an excitation inductance structure of the primary winding of the first transformer T1 is divided into a third inductance L3 and a fourth inductance L4 by a center tap. As shown in FIG. 15, in the primary winding of the first transformer T1, the primary excitation inductor is functioned as a whole, namely the third inductance L3.

The other circuit components in this embodiment have the same structure as those in the first embodiment and will not be repeated.

### Embodiment 8

Referring to FIG. 16, in accordance with an eighth embodiment of the present invention, a bidirectional DCDC conversion circuit is provided. In this embodiment, the transformer bank comprises a plurality of transformers, and the primary sides of the plurality of transformers are connected in parallel or series, and the secondary sides of the multiple transformers are connected in parallel or series, respectively. The power bus side circuit comprises a plurality of energy storage branches, each of which is connected to the primary side of one corresponding transformer, and each energy storage branch has a uniform phase offset between them.

Preferably, the transformer bank comprises a first transformer T1 and a second transformer T2, wherein the primary winding of the first transformer T1 is connected in series with the primary winding of the second transformer T2, and the secondary winding of the first transformer T1 is connected in parallel with the secondary winding of the second transformer T2. The common terminal of the primary winding of the first transformer T1 is connected to the positive terminal VBUS+ of the power bus, and the opposite terminal of the primary winding of the second transformer T2 is connected to the negative terminal VBUS- of the power bus. The opposite terminal of the primary winding of the first transformer T1 is connected to the common terminal of the primary winding of the second transformer T2 and grounded.

The power bus side circuit comprises a first energy storage branch and a second energy storage branch. The first energy storage branch comprises a first inductor L1, a third capacitor C3, and a first switching transistor Q1. The second energy storage branch comprises a second inductor L2, a fourth capacitor C4, and a second switching transistor Q2.

The battery side circuit comprises a third switching transistor Q3 and a fourth switching transistor Q4, wherein the fourth switching transistor Q4 is connected to the secondary winding of the first transformer T1, and the third switching transistor Q3 is connected to the secondary winding of the second transformer T2. The controller is configured to separately control the on/off of the first switching transistor Q1, the second switching transistor Q2, the third switching transistor Q3, and the fourth switching transistor Q4.

A phase offset between the first switching transistor Q1 and the second switching transistor Q2 is 180 °, the fourth switching transistor Q3 and the first switching transistor Q1 are provided with a complementary switching capability, namely in a complementary switching fashion, and the third switching transistor Q3 and the second switching transistor Q2 are provided with a complementary switching capability.

Preferably, a first capacitor C1 is connected between the positive terminal VBUS+ of the power bus and the opposite terminal of the primary winding of the first transformer T1. The first inductor L1 and the third capacitor C3 are connected in series and both are connected between the positive terminal VBUS+ of the power bus and the common terminal of the primary winding of the first transformer T1. A drain of the first switching transistor Q1 is connected to a connection line between the first inductor L1 and the third capacitor C3, and a source of the first switching transistor Q1 is connected to the opposite terminal of the primary winding of the transformer T 1.

A second capacitor C2 is connected between the negative terminal VBUS- of the power bus and the common terminal of the primary winding of the second transformer T2. The second inductor L2 and the fourth capacitor C4 are connected in series and then connected between the negative terminal VBUS- of the power bus and the opposite terminal of the primary winding of the second transformer T2. A source of the second switching transistor Q2 is connected to a connection line between the second inductor L2 and the fourth capacitor C4, and a drain of the second switching transistor Q2 is connected to the common terminal of the primary winding of the second transformer T2.

A drain of the fourth switching transistor Q4 is connected to the opposite terminal of the secondary winding of the first transformer T1, and the source of the fourth switching transistor Q4 is grounded. A drain of the third switching transistor Q3 is connected to the opposite terminal of the secondary winding of the second transformer T2, and the source of the third switching transistor Q3 is grounded. The common terminal of the secondary winding of the first transformer T1 and the common terminal of the secondary winding of the second transformer T2 are connected in parallel to the battery VBAT.

Specifically, in this embodiment, a phase offset between the first switching transistor Q1 connected to the first transformer T1 and the second switching transistor Q2 connected to the second transformer T2 is 180 degree to effectively reduce fluctuations in output voltage.

In other alternative embodiment, a plurality of circuit units consisting of transformers and energy storage branches are connected in series or parallel, and these circuit units are separately controlled in accordance with a certain phase offset, such as 120 degree offset between three circuit units, 90 degree phase offset between four circuit units, etc. This will not only increase output power but also effectively reduce output voltage vibration.

In the above-mentioned bidirectional DCDC converter and conversion circuit, the power bus side circuit and the battery side circuit are respectively connected to the primary and secondary sides of the transformer. The bus side switching transistors synchronously on or off under the control of the controller, and on or off of the battery side switching transistors are opposite to that of the bus side switching transistor, thereby achieving bidirectional charging and discharging of the battery. The plurality of energy storage branches are connected in series or parallel, and output vibration will be effectively reduced through phase offset control. The bidirectional DCDC conversion circuit of the present disclosure is free of an additional balancing circuit, and the balancing capacitors on the power supply side will automatically balance the bus voltage. The bidirectional DCDC conversion circuit of the present disclosure has a usefuuly simplified structure, uses fewer components, a reduced cost, and an improved conversion efficiency of the circuit. The circuit structure of the present disclosure is readily operated, cost-effective, and convenient to promote.

It should be noted that the above embodiments are merely preferred ones of the invention and are not used to limit the invention. For those skilled in the art, various transformations and modifications of the invention can be made. Any amendments, equivalent substitutions and improvements made based on the spirit and principle of the invention should also fall within the protection scope of the invention.

## Claims

1. A bidirectional DCDC converter, being configured for bidirectional charge and discharge of a battery, wherein the bidirectional DCDC converter comprises a transformer bank, a bus side circuit, a battery-side circuit and a controller, wherein the transformer bank comprises at least one transformer, and the power bus side circuit is electrically connected at a primary side of the transformer bank and between a positive terminal VBUS+ and a negative terminal VBUS- of the power bus, the battery side circuit is electrically connected between a secondary side of the transformer bank and the battery VBAT;
the power bus side circuit comprises a plurality of energy storage branches, each energy storage branch comprises at least one bus side switching transistor, the battery side circuit comprises at least one battery side switching transistor; the controller is configured for controlling on/off of each bus side switching transistor and each battery side switching transistor; the bus side switching transistors are turned on and off synchronously, and the battery-side switching transistor and the bus side switching transistor are turned on and off complementarily; and
a balancing capacitor is provided between the power bus side circuit and any one of the positive terminal VBUS+ and the negative terminal VBUS- of the power bus; and each balancing capacitor is configured to automatically balance voltages of the positive terminal VBUS+ and the negative terminal VBUS- of the power bus through the energy storage branch.

2. The bidirectional DCDC converter according to claim 1, wherein the battery side circuit further comprises a battery side filtering capacitor, and the secondary side of the transformer and the battery side switching transistor are connected in series and then connected in parallel with the battery side filtering capacitor between the battery VBAT and a grounding wire.

3. The bidirectional DCDC converter according to claim 1, wherein each energy storage branch further comprises an energy storage inductor, and each energy storage inductor is a coupled inductor or a non-coupled inductor; and each of the bus side switching transistors and the battery side switching transistors is selected from a group consisting of MOSFET, IGBT and a bipolar transistor.

4. A bidirectional DCDC conversion circuit, comprising a bidirectional DCDC converter according to any of claims 1 to 3, wherein the transformer bank comprises a transformer T1, a primary winding of the first transformer T1 has a center tap which is grounded;
the power bus side circuit comprises a first energy storage branch and a second energy storage branch, the first energy storage branch comprises a first inductor L1, a third capacitor C3, and a first switching transistor Q1, the second energy storage branch comprises a second inductor L2, a fourth capacitor C4, and a second switching transistor Q2;
a first capacitor C1 is connected between the positive terminal VBUS+ of the power bus and the center tap of the primary winding of the first transformer T1; the first inductor L1 and the third capacitor C3 are connected in series and both connected between the positive terminal VBUS+ of the power bus and a common terminal of the primary winding of the first transformer T1; a drain of the first switching transistor Q1 is connected to a connection line between the first inductor L1 and the third capacitor C3; and a source of the first switching transistor Q1 is connected to the center tap of the primary winding of the first transformer T1; and
a second capacitor C2 is connected between the negative terminal VBUS- of the power bus and the center tap of the primary winding of the first transformer T 1; the second inductor L2 and the fourth capacitor C4 are connected in series and both connected between the negative terminal VBUS- of the power bus and an opposite terminal of the primary winding of the first transformer T1, a source of the second switching transistor Q2 is connected to a connection line between the second inductor L2 and the fourth capacitor C4; and a drain of the second switching transistor Q2 is connected to the center tap of the primary winding of the first transformer T1.

5. The bidirectional DCDC conversion circuit according to claim 4, wherein the battery side circuit comprises a third switching transistor Q3 and a fifth capacitor C5; the common terminal of the secondary winding of the first transformer T1 is connected to the battery VBAT, both ends of the fifth capacitor C5 are respectively connected to a source of the third switching transistor Q3 and the battery VBAT; and a drain of the third switching transistor Q3 is connected to an opposite terminal of the secondary winding of the first transformer T1; and
a source of the third switching transistor Q3 and a terminal of the fifth capacitor C5 are grounded.

6. The bidirectional DCDC conversion circuit according to claim 4, wherein further comprises an active absorption circuit which is connected to the battery side circuit, and comprises a first diode D1, a second diode D2, a third inductor L3, and a sixth capacitor C6; and
the first diode D1, the second diode D2, and the third inductor L3 are sequentially connected in series, and the three series diodes are connected in parallel with the fifth capacitor C5; both terminals of the sixth capacitor C6 are respectively connected to a connection line between the first diode D1 and the second diode D2, and a connection line between the opposite terminal of the secondary winding of the first transformer T1 and a drain of the third switching transistor Q3.

7. A bidirectional DCDC conversion circuit, comprising a bidirectional DCDC converter according to any of claims 1 to 3, wherein the transformer bank comprises a transformer T1 which has two primary windings; the two primary windings are a first primary winding and a second primary winding; a common terminal of the first primary winding is connected to a positive terminal VBUS+ of the power bus; an opposite terminal of the second primary winding is connected to a negative terminal VBUS- of the power bus;
the power bus side circuit comprises a first energy storage branch and a second energy storage branch; the first energy storage branch comprises a first inductor L1, a third capacitor C3, and a first switching transistor Q1; the second energy storage branch comprises a second inductor L2, a fourth capacitor C4, and a second switching transistor Q2;
the first inductor L1 and the third capacitor C3 are connected in series and both connected between a grounded line and an opposite terminal of the primary winding of the first transformer T1; a source of the first switching transistor Q1 is connected to a connection line between the first inductor L1 and the third capacitor C3, and a drain of the first switching transistor Q1 is connected between a positive terminal VBUS+ of the power bus and the common terminal of the first primary winding of the first transformer T1; and a first capacitor C1 is connected between the positive terminal VBUS+ of the power bus and a free end of the first inductor L1; and
the second inductor L2 and the fourth capacitor C4 are connected in series and both connected between a grounded wire and a common terminal of the second primary winding of the first transformer T1; a drain of the second switching transistor Q2 is connected to a connection line between the second inductor L2 and the fourth capacitor C4, and a source of the second switching transistor Q2 is connected between the negative terminal VBUS- of the power bus and an opposite terminal of a second primary winding of the first transformer T1; and a second capacitor C2 is connected between negative terminal VBUS- of the power bus and a free end of the first inductor L2.

8. The bidirectional DCDC conversion circuit according to claim 7, wherein the battery side circuit comprises a third switching transistor Q3 and a fifth capacitor C5; the common terminal of the secondary winding of the first transformer T1 is connected to the battery VBAT, and both ends of the fifth capacitor C5 are respectively connected to a source of the third switching transistor Q3 and the battery VBAT; a drain of the third switching transistor Q3 is connected to an opposite terminal of the secondary winding of the first transformer T1; and
a source of the third switching transistor Q3 and a terminal of the fifth capacitor C5 are grounded.

9. The bidirectional DCDC conversion circuit according to claim 7, wherein the bidirectional DCDC conversion circuit further comprises a clamp circuit, which comprises a first diode D1 and a second diode D2, wherein an anode of the first diode D1 is connected to the negative terminal VBUS - of the power bus, and a cathode of the first diode D1 is connected to a connection line between the opposite terminal of the first primary winding of the first transformer T1 and the third capacitor C3; a cathode of the second diode D2 is connected to the positive terminal VBUS+ of the power bus; and an anode of the second diode D2 is connected to a connection line between a common terminal of the second primary winding of the first transformer T1 and the fourth capacitor C4.

10. A bidirectional DCDC conversion circuit, which comprises a bidirectional DCDC converter according to any of claims 1 to 3, wherein the transformer bank comprises a plurality of transformers, and the primary sides of the plurality of transformers are connected in parallel or series, and the secondary sides of the multiple transformers are connected in parallel or series, respectively; and
the power bus side circuit comprises a plurality of energy storage branches, each of which is connected to the primary side of one corresponding transformer, and each energy storage branch has a uniform phase offset between them.

11. The bidirectional DCDC conversion circuit according to claim 10, wherein the transformer bank comprises a first transformer T1 and a second transformer T2, wherein the primary winding of the first transformer T1 is connected in series with the primary winding of the second transformer T2, and the secondary winding of the first transformer T1 is connected in parallel with the secondary winding of the second transformer T2; a common terminal of the primary winding of the first transformer T1 is connected to a positive terminal VBUS+ of the power bus, and an opposite terminal of the primary winding of the second transformer T2 is connected to the negative terminal VBUS- of the power bus; and the opposite terminal of the primary winding of the first transformer T1 is connected to the common terminal of the primary winding of the second transformer T2 and grounded.

12. The bidirectional DCDC conversion circuit according to claim 11, wherein the power bus side circuit comprises a first energy storage branch and a second energy storage branch; the first energy storage branch comprises a first inductor L1, a third capacitor C3, and a first switching transistor Q1; the second energy storage branch comprises a second inductor L2, a fourth capacitor C4, and a second switching transistor Q2; and
the battery side circuit comprises a third switching transistor Q3 and a fourth switching transistor Q4, wherein the fourth switching transistor Q4 is connected to the secondary winding of the first transformer T1, and the third switching transistor Q3 is connected to the secondary winding of the second transformer T2; the controller is configured to separately control the on/off of the first switching transistor Q1, the second switching transistor Q2, the third switching transistor Q3, and the fourth switching transistor Q4.

13. The bidirectional DCDC conversion circuit according to claim 12, wherein a phase offset between the first switching transistor Q1 and the second switching transistor Q2 is 180 °, the fourth switching transistor Q3 and the first switching transistor Q1 are provided with a complementary switching capability; and the third switching transistor Q3 and the second switching transistor Q2 are provided with a complementary switching capability.

14. The bidirectional DCDC conversion circuit according to claim 13, wherein a first capacitor C1 is connected between the positive terminal VBUS+ of the power bus and the opposite terminal of the primary winding of the first transformer T1; the first inductor L1 and the third capacitor C3 are connected in series between the positive terminal VBUS+ of the power bus and the common terminal of the primary winding of the first transformer T1; a drain of the first switching transistor Q1 is connected to a connection line between the first inductor L1 and the third capacitor C3; and a source of the first switching transistor Q1 is connected to the opposite terminal of the primary winding of the transformer T 1; and
a second capacitor C2 is connected between the negative terminal VBUS- of the power bus and the common terminal of the primary winding of the second transformer T2; the second inductor L2 and the fourth capacitor C4 are connected in series and then connected between the negative terminal VBUS- of the power bus and the opposite terminal of the primary winding of the second transformer T2; a source of the second switching transistor Q2 is connected to a connection line between the second inductor L2 and the fourth capacitor C4; and a drain of the second switching transistor Q2 is connected to the common terminal of the primary winding of the second transformer T2.

15. The bidirectional DCDC conversion circuit according to claim 14, wherein a drain of the fourth switching transistor Q4 is connected to the opposite terminal of the secondary winding of the first transformer T1, and the source of the fourth switching transistor Q4 is grounded; a drain of the third switching transistor Q3 is connected to the opposite terminal of the secondary winding of the second transformer T2, and the source of the third switching transistor Q3 is grounded; and the common terminal of the secondary winding of the first transformer T1 and the common terminal of the secondary winding of the second transformer T2 are connected in parallel to the battery VBAT.
